# EUROPÄISCHE PATENTSCHRIFT

(11) **EP 2 816 246 B1**
(45) Veröffentlichungstag und Bekanntmachung des Hinweises auf die Patenterteilung: **20.07.2016**
(21) Anmeldenummer: 14169600.5
(22) Anmeldetag: 23.05.2014
(51) Int. Cl.: F16C 33/60, F16C 19/38, F16C 25/06

(54) **Lageranordnung mit Zwischenring**
Bearing assembly with spacing element
Système de palier avec entretoise

(30) Priorität: 21.06.2013 DE 102013211762
(43) Veröffentlichungstag der Anmeldung: 24.12.2014
(73) Patentinhaber: Aktiebolaget SKF, 415 50 Göteborg (SE)
(72) Erfinder: Hofmann, Katrin, 97355 Atzhausen (DE); Stubenrauch, Arno, 97491 Aidhausen (DE); Thangavelu, Malinipriya, 97421 Schweinfurt (DE); Olschewski, Armin, 97422 Schweinfurt (DE)
(74) Vertreter: Kuhstrebe, Jochen

(56) Entgegenhaltungen:
- EP-A1- 1 837 535
- WO-A1-2011/045146
- WO-A1-2012/069274
- US-A1- 2008 124 014

## Beschreibung

Ausführungsbeispiele beziehen sich auf das Gebiet der Lagerung von rotierenden Wellen und insbesondere auf eine Lageranordnung.

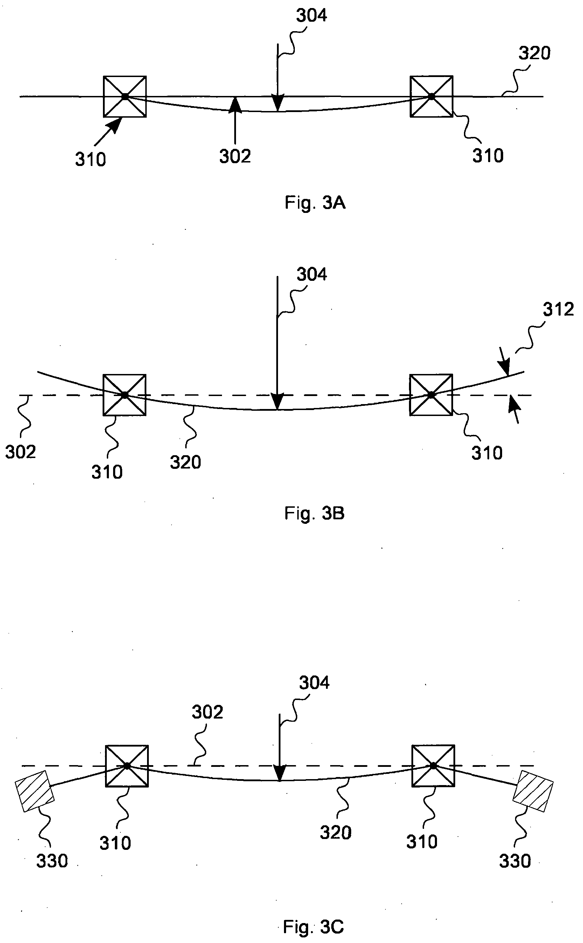

Bei der Lagerung von rotierenden Wellen kann es durch unterschiedliche Belastungen der Welle zu Verformung der Welle und dadurch resultierend auch zu Verformungen innerhalb der Lageranordnungen kommen, die die rotierbare Welle lagern. Fig. 3a zeigt ein Beispiel für eine mittige Belastung 304 einer Welle 320, die von zwei Lageranordnungen 310 gelagert ist. Durch die mittige Belastung 304 kommt es zu einer Verbiegung der Welle 320 von einem unbelasteten Zustand 302 der Welle 320 weg. Durch die mittige Belastung der Welle 320 (kann aber auch außermittig belastet sein) kommt es zu einer Belastung der Welle 320 und der Wellenzapfen und zu einer Umlaufbiegung (bending dynamic), wie es in Fig. 3b gezeigt ist. Dadurch stellt sich ein Winkel 312 an den Enden der Welle ein. Alternativ kann die Umlaufbiegung der Welle 320 aufgrund rotierender Massen 330 eine andere Form der Wellenzapfen-Umlaufbiegung an den Enden der Welle ergeben.

Die WO 2012/069274 beschreibt eine Lageranordnung mit zwei Wälzlagern und einem dazwischenliegenden Zwischenring. Die Wälzlager sind in einer O-Anordnung angeordnet.

Die Druckschriften EP 1837535 und US 2008/124014 offenbaren Lageranordnungen mit zwei Wälzlagern in einer X-Anordnung und einem dazwischenliegenden Zwischenring.

Durch die Verformung der Welle kann es zu daraus resultierenden Verformungen innerhalb der Lageranordnungen kommen. Durch solche Verformungen einer Lageranordnung kann es zu einem erhöhten Verschleiß und daraus folgend zu einer geringeren Lagerlebensdauer kommen.

Es besteht daher der Bedarf, eine Lageranordnung zu schaffen, die eine Reduktion des Verschleißes und/oder eine Erhöhung der Lagerlebensdauer ermöglicht.

Dieser Bedarf wird durch eine Lageranordnung gemäß Anspruch 1 gedeckt.

Einige Ausführungsbeispiele beziehen sich auf eine Lageranordnung, die ein erstes Wälzlager, ein zweites Wälzlager und einen Zwischenring aufweist. Das erste Wälzlager umfasst einen Innenring, der mit einer Welle verdrehfest verbindbar ist. Der Innenring des ersten Wälzlagers weist eine Lauffläche für Wälzkörper des ersten Wälzlagers auf Das zweite Wälzlager umfasst einen Innenring der ebenfalls mit der Welle verdrehfest verbindbar ist. Der Innenring des zweiten Wälzlagers weist eine Lauffläche für Wälzkörper des zweiten Wälzlagers auf. Der Zwischenring ist in axialer Richtung zwischen dem Innenring des ersten Wälzlagers und dem Innenring des zweiten Wälzlagers angeordnet. Ferner weist der Zwischenring einen maximalen Außendurchmesser auf, der kleiner ist als ein maximaler Durchmesser der Lauffläche des Innenrings des ersten Wälzlagers und kleiner ist als ein maximaler Durchmesser der Lauffläche des Innenrings des zweiten Wälzlagers.

Durch die Anordnung eines Zwischenrings zwischen den Innenringen der Wälzlager kann verhindert werden, dass bei Verformung der Welle der Innenring in Richtung der Wälzkörper verformt wird und damit die Kontaktgeometrie im Wälzkontakt Rolle/Bord. Dies kann beispielsweise bedeuten, dass durch Verschleiß an Bord und/oder Rolle die erforderliche Laufzeit der Lager nicht erreicht werden kann. Durch den Zwischenring kann zwischen den Führungsborden der Innenringe ein Abstand erzeugt werden, sodass die Führungsborde der Innenringe bei Verformungen der Lageranordnung nicht mehr oder weniger gegeneinander drücken. Dadurch kann der Verschleiß gering gehalten werden und die Lagerlebensdauer erhöht werden.

Bei erfindungsgemäßen Ausführungsbeispielen weist der Zwischenring eine axiale Abmessung auf, die kleiner ist als eine radiale Abmessung eines Querschnitts des Zwischenrings. Dadurch kann der vom Zwischenring benötigte zusätzliche axiale Bauraum gering gehalten werden.

Erfindungsgemäße Ausführungsbeispiele beziehen sich auf eine Lageranordnung, bei der die beiden Wälzlager Kegelrollenlager in einer X-Anordnung sind. Dadurch kann mit geringem Aufwand eine solche Lageranordnung mit hoher Lagerlebensdauer implementiert werden.

Ausführungsbeispiele werden nachfolgend, bezugnehmend auf die beiliegenden Figuren, näher erläutert. Diese zeigen:
Fig. 1 eine schematische Darstellung einer Lageranordnung;
Fig. 2 eine schematische Darstellung einer weiteren Lageranordnung;
Fig. 3a bis 3c schematische Darstellungen von Wellenzuständen bei belasteten Wellen;
Fig. 4 eine schematische Darstellung eines nicht erfindungsgemäßen Kegelrollenlagers in X-Anordnung; und

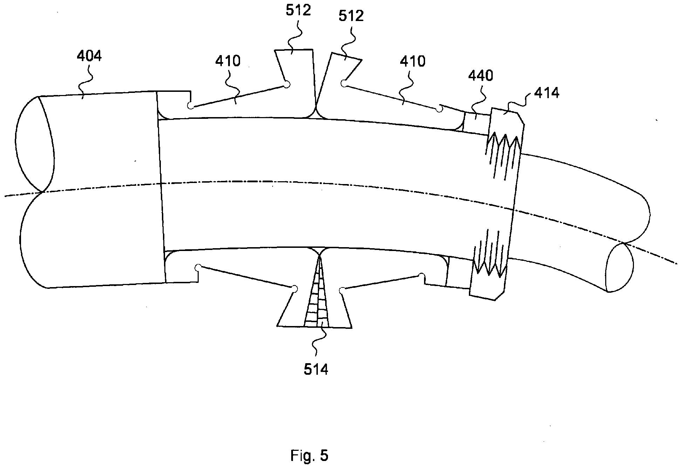

Fig. 5 eine schematische Darstellung einer Verformung einer nicht erfindungsgemäßen Lageranordnung ohne Zwischenring.

Im Folgenden können bei unterschiedlichen, beschriebenen Ausführungsbeispielen teilweise für Objekte und Funktionseinheiten, die gleiche oder ähnliche funktionelle Eigenschaften aufweisen, gleiche Bezugszeichen verwendet werden. Ferner können zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt. Des Weiteren können optionale Merkmale der verschiedenen Ausführungsbeispiele miteinander kombinierbar oder zueinander austauschbar sein.

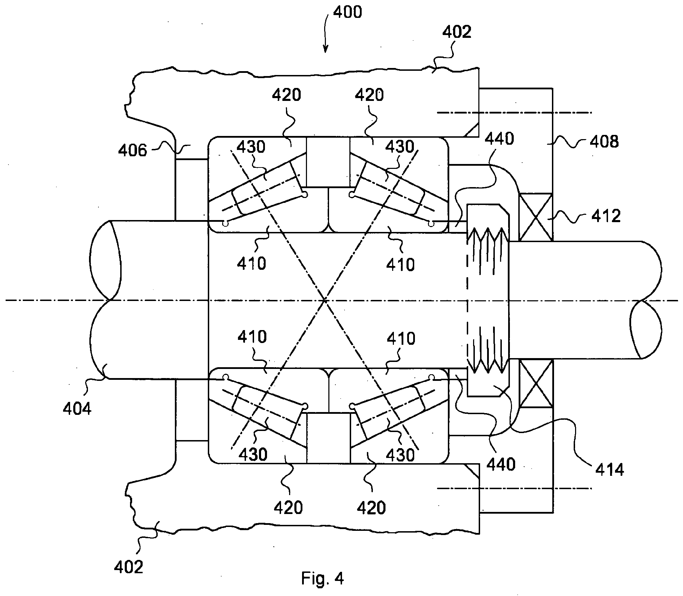

Bei Lageranordnungen mit zumindest zwei Wälzlagern kann es zu einer verschleißerhöhenden Verformung der Führungsborde der Innenringe der Wälzlager kommen. Ein Beispiel für eine Lageranordnung 400 mit zwei Kegelrollenlagern ist in Fig. 4 gezeigt. Die Kegelrollenlager weisen axial aneinander anliegende Innenringe 410 und mit einem Gehäuse 402 verbundene Außenringe (Lageraußenringe) 420 auf. Ferner weisen die Lager kegelförmige Wälzkörper 430 (Rollen) auf. Die Kegelrollenlager sind dabei in einer X-Anordnung zueinander auf einer Welle 404 angeordnet. Die Innenringe der Kegelrollenlager sind zwischen einem axialen Anschlag der Welle 404 und einer Distanzscheibe 440 zur Vorspannung des Lagers angeordnet. Die Außenringe 420 der Kegelrollenlager sind zwischen einem Befestigungsbord des Lagers (des Gehäuses) 406 und einer Außenringbefestigung 408 angeordnet. Zwischen der Außenringbefestigung 408 und der Welle kann eine Dichtung 412 angeordnet werden. Über eine Schraube 414 kann eine Vorspannung über die Distanzscheibe 440 auf das Lager ausgeübt werden. Dazu kann die Welle 404 im Bereich der Schraube 414 ein Gewinde aufweisen.

Bei einer Verbiegung der Welle 404 kann es auf einer Seite zu einer Spaltbildung (oder Bildung einer Öffnung) zwischen den Innenringen 410 und/oder den Führungsborden 512 der Innenringe 410 kommen und auf der gegenüberliegenden Seite können die Führungsborde 512 gegenseitig einen Druck 514 aufeinander ausüben, sodass es zur Verformung der Führungsborde 512 kommen kann. Durch die Verformung der Führungsborde 512 können diese einen erhöhten Druck auf die Wälzkörper der Lageranordnung ausüben und so einen erhöhten Verschleiß und eine Verringerung der Lagerlebensdauer verursachen. Beispielsweise kann es zu Reibungskorrosion kommen.

Durch den gegenseitigen Druck 514 kann es auch beispielsweise zu einer plastischen Verformung des Bords kommen, woraus eine Ablaufstörung im Lager (Verschleiß) folgen kann.

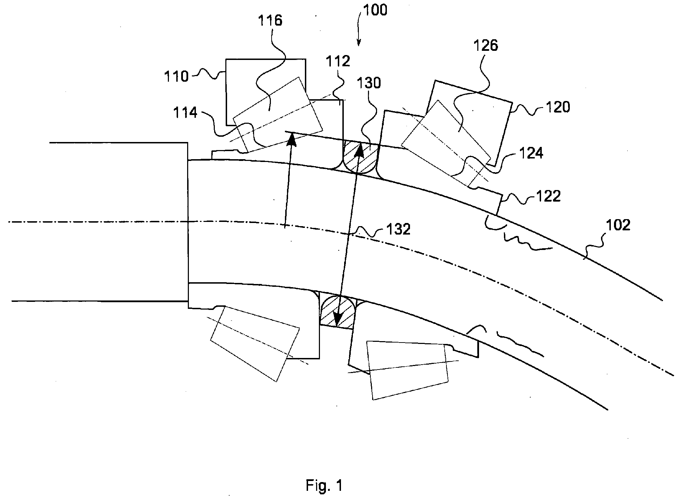

Fig. 1 zeigt eine schematische Darstellung einer Lageranordnung 100 gemäß einem Ausführungsbeispiel. Die Lageranordnung 100 weist ein erstes Wälzlager 110, ein zweites Wälzlager 120 und einen Zwischenring 130 auf. Das erste Wälzlager 110 umfasst einen Innenring 112, der mit einer Welle 102 verdrehfest verbindbar ist. Der Innenring 112 des ersten Wälzlagers 110 weist eine Lauffläche 114 für Wälzkörper 116 des ersten Wälzlagers 110 auf Das zweite Wälzlager 120 umfasst einen Innenring 122, der mit der Welle 102 ebenso verdrehfest verbindbar ist. Der Innenring 122 des zweiten Wälzlagers 120 weist eine Lauffläche 124 für Wälzkörper 126 des zweiten Wälzlagers 120 auf. Der Zwischenring 130 ist in axialer Richtung zwischen dem Innenring 112 des ersten Wälzlagers 110 und dem Innenring 122 des zweiten Wälzlagers 120 angeordnet. Ferner weist der Zwischenring 130 einen maximalen Außendurchmesser 132 auf, der kleiner ist als ein maximaler Durchmesser der Lauffläche 114 des Innenrings 112 des ersten Wälzlagers 110 und kleiner ist als ein maximaler Durchmesser der Lauffläche 124 des Innenrings 122 des zweiten Wälzlagers 120.

Durch die Anordnung des Zwischenrings 130 zwischen den Innenringen der Wälzlager kann zwischen den Führungsborden der Innenringe ein Spalt erzeugt werden, sodass diese bei Verformung der Welle 102 nicht oder deutlich weniger aufeinander gedrückt und verformt werden und auf die Wälzkörper drücken. Dadurch kann der Verschleiß deutlich reduziert und die Lagerlebensdauer deutlich erhöht werden.

Die Lageranordnung 100 kann zwei (das erste und das zweite) Wälzlager oder mehr Wälzlager aufweisen. Dabei kann nur zwischen dem ersten und dem zweiten Wälzlager ein Zwischenring 130 angeordnet sein oder entsprechend auch zwischen allen oder einigen weiteren Innenringen der Wälzlager.

Das erste Wälzlager 110 und das zweite Wälzlager 120 weisen beispielsweise neben dem Innenring und den Wälzkörpern zumindest einen Außenring auf und können vom gleichen oder unterschiedlichen Lagertyp (z.B. Kegelrollenlager, Schrägkugellager oder Pendelrollenlager) sein. Beispielsweise können das erste Wälzlager 110 und das zweite Wälzlager 120 Kegelrollenlager sein. Dabei sind das erste Wälzlager 110 und das zweite Wälzlager 120 erfindungsgemäß in einer X-Anordnung (z.B. definiert durch Rotationsachsen der Wälzkörper, die sich an der dem jeweils anderen Wälzlager abgewandten axialen Seite schneiden) angeordnet.

Sind das erste Wälzlager und das zweite Wälzlager vom gleichen Lagertyp können die beiden Wälzlager unterschiedlich ausgeführt sein (z.B. wegen asymmetrischer Belastung oder unterschiedlichem zur Verfügung stehenden Bauraum) oder auch in axialer Richtung symmetrisch zueinander konstruiert sein. Dadurch können beispielsweise die Kosten gering gehalten werden, da eine größere Stückzahl von gleichen Wälzlagern implementiert werden kann.

Die Innenringe der Wälzlager können beispielsweise zumindest auf einer axialen Seite ein radial über die Lauffläche hinausragendes Führungsbord (z.B. auch Lagerbord oder allgemein Bord genannt) aufweisen. Ferner weist jeder der beiden Innenringe eine Lauffläche auf an der die Wälzkörper der Lager im Betrieb entlanglaufen oder -rollen.

Die Laufflächen der Lagerringe sind zur Rotationsachse der Welle 102 unter einem festen Winkel geneigt (z.B. bei Kegelrollenlagern). Ein maximaler Durchmesser der Lauffläche eines Innenrings variert dementsprechend in axialer Richtung (z.B. beim Kegelrollenlager). Der maximale Durchmesser entspricht dann jenem Durchmesser, der entlang der Lauffläche in axialer Richtung am größten ist.

Die axiale Richtung erstreckt sich beispielweise parallel zu der Rotationsachse der (unverformten) Welle 102 und die radiale Richtung erstreckt sich z.B. orthogonal zu der Rotationsachse der Welle 102.

Die Welle 102 kann ein beliebiger im Betrieb um seine Achse rotierender Bauteil einer Maschine oder Vorrichtung sein, in der eine Lageranordnung 100 nach dem beschriebenen Konzept zum Einsatz kommt. Die Lageranordnung 100 kann über die Innenringe der Wälzlager verdrehfest (z.B. keine relative Drehung zwischen der Welle und den Innenringen ohne Zerstörung oder Beschädigungen) verbunden werden und ist beispielsweise nicht Teil der Lageranordnung 100. Alternativ kann die Welle 102 optional auch Teil der Lageranordnung 100 sein.

Der Zwischenring 130 (oder auch Zwischenscheibe oder Toleranzscheibe genannt) ist in axialer Richtung zwischen den Innenringen der Wälzlager angeordnet. Dabei kann der Zwischenring 130 beispielsweise in axialer Richtung direkt an dem Innenring 112 des ersten Wälzlagers 110 und an dem Innenring 122 des zweiten Wälzlagers 120 anliegen (z.B. ohne ein anderes Bauteil zwischen den Lagerringen und dem Zwischenring, aber unter Vernachlässigung von Verbindungsmittel, wie z.B. Kleber). Dadurch kann die Lageranordnung 100 mit geringem zusätzlichen axialen Bauraum implementiert werden. Der Lagerring 130 kann verdrehfest mit einem oder beiden Lagerringen verbunden sein oder lose zwischen den beiden Innenringen angeordnet sein. Alternativ kann auch ein oder mehrere Bauteile axial zwischen dem Zwischenring 130 und einem oder beiden Innenringen der Wälzlager angeordnet sein.

Ein Außendurchmesser 132 des Zwischenrings 130 ist kleiner als ein maximaler Durchmesser der Laufflächen der Wälzlager. Dadurch kann beispielsweise gewährleistet werden, dass ein Spalt zwischen den Führungsborden, die sich über die Lauffläche radial hinaus erstrecken und eine Führung für die Wälzkörper bieten, erzeugt wird, in den sich die Führungsborde bei Verformung hineinbiegen können ohne gegen das andere Führungsbord zu drücken. Wäre der Zwischenring 130 größer als der maximale Durchmesser der Laufflächen der Innenringe der Wälzlager, würde dieser Effekt beispielsweise zumindest abgeschwächt werden, da das eine Führungsbord über den Zwischenring 130 auf das andere Führungsbord drücken würde. In anderen Worten, der Zwischenring 130 erstreckt sich beispielsweise bis maximal zum (radial) inneren Rand des Bords. Der maximale Außendurchmesser 132 des Zwischenrings 130 entspricht dabei beispielsweise dem Durchmesser einer radial äußeren Fläche des Zwischenrings 130, die den Zwischenring 130 nach radial außen abschließt oder dem radial am weitesten außen liegenden Punkt des Zwischenrings 130.

Erfindungsgemäß ist der Außendurchmesser 132 des Zwischenrings 130 kleiner als ein Durchmesser der Lauffläche an einem Punkt oder einem Teil der Lauffläche, der dem Zwischenring 130 axial am nächsten liegt.

Der Zwischenring 130 kann einen im Wesentlichen rechteckigen oder quadratischen Querschnitt oder einen vierseitigen Querschnitt mit abgerundeten Ecken (runden Übergängen zwischen den Seiten) aufweisen. Dabei weist der Zwischenring 130 eine (z.B. konstante, mittlere oder maximale) axiale Abmessung (z.B. axiale Ausdehnung, Dicke oder axiale Länge) auf, die kleiner ist als eine radiale Abmessung eines Querschnitts des Zwischenrings 130 (z.B. Distanz zwischen Innendurchmesser und Außendurchmesser des Zwischenrings). Dadurch kann ermöglicht werden, dass der Zwischenring 130 nur geringen axialen Bauraum benötigt. Die genauen Abmessungen des Zwischenrings 130 können sich je nach Anwendungsbereich der Lageranordnung unterscheiden, da die Größe der Wälzlager in weiten Bereichen variieren kann. Für manche Anwendungen weist der Zwischenring 130 eine axiale Abmessung von weniger als 0,5 mm (oder weniger als 0,3 mm, weniger als 0,2 mm oder weniger als 0,1 mm) auf oder die axiale Abmessung kann zwischen 0,5 und 0,05 mm (oder zwischen 0,2 mm und 0,1 mm) liegen.

Der Zwischenring 130 kann unterschiedliche Materialien aufweisen oder aus unterschiedlichen Materialien bestehen. Beispielsweise kann der Zwischenring 130 Stahl oder Kunststoff mit Glasfasern aufweisen oder aus Stahl oder Kunststoff mit Glasfasern bestehen.

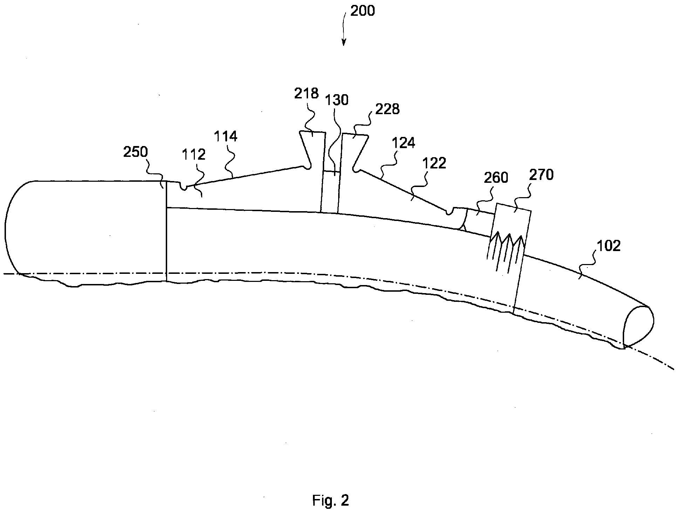

Fig. 2 zeigt eine schematische Darstellung einer weiteren Lageranordnung 200 gemäß einem Ausführungsbeispiel. Die Lageranordnung 200 entspricht im Wesentlichen dem Aufbau der Lageranordnung aus Fig. 1, sodass dementsprechend auch die vorherigen Ausführungen gelten. Die Lageranordnung 200 ist auf einer Welle 102 mit einem axialen Anschlag 250 angeordnet. Die Lageranordnung 200 wird an einer dem axialen Anschlag 250 gegenüberliegenden Ende über eine Distanzscheibe 260 von einer Schraube oder Mutter 270 gegen den axialen Anschlag 250 gedrückt und so in ihrer Position fixiert. Zwischen den Innenringen der beiden Wälzlager der Lageranordnung 200 ist ein Zwischenring 130 angeordnet, sodass zwischen dem Führungsbord 218 des Innenrings 112 des ersten Wälzlagers und dem Führungsbord 228 des Innenrings 122 des zweiten Wälzlagers ein axialer Spalt vorhanden ist, der Platz für eine Verformung der Führungsbords bei Verformung der Welle 102 bietet.

Erfindungsgemäße Ausführungsbeispiele beziehen sich auf eine Kegelrollenlageranordnung in X-Anordnung mit Zwischenscheibe. Dabei kann eine Zwischenscheibe zwischen zwei Kegelrollenlagern in X-Anordnung (Material z.B. Stahlblech, Kunststoff mit Glasfasern) eingebracht werden, die verhindert, dass die benachbarten Borde der Lager bei Biegung der Welle, auf der die Innenringe sitzen, aufeinander drücken. Mit anderen Worten, durch den Zwischenring 130 kann z.B. eine Berührung zwischen den Führungsborden bei Verformung der Welle verhindert werden. Dadurch kann die Lagerlebensdauer erhöht werden. Beispielsweise kann das beschriebene Konzept Anwendung bei Windkraftanlagen finden.

Beispielsweise kann in eine Lageranordnung, wie sie in Fig. 4 gezeigt ist, ein Zwischenring zwischen den Innenringen der beiden Kegelrollenlager integriert werden, um eine Lageranordnung nach dem beschriebenen Konzept zu erhalten.

Einige Ausführungsbeispiele beziehen sich auf eine Windkraftanlage mit einer Lageranordnung nach dem beschriebenen Konzept oder einem der zuvor beschriebenen Ausführungsbeispiele.

Einige Ausführungsbeispiele beziehen sich auf ein Verfahren zu Herstellung einer Lageranordnung mit einem ersten Wälzlager, einem zweiten Wälzlager und einem Zwischenring nach dem zuvor beschriebenen Konzept oder einem der Ausführungsbeispiele.

Die in der vorstehenden Beschreibung, den nachfolgenden Ansprüchen und in den Zeichnungen offenbarten Merkmale können sowohl einzeln als auch in beliebiger Kombination für die Verwirklichung der Erfindung in ihren verschiedenen Ausgestaltungen und im Rahmen der nachstehenden Ansprüche von Bedeutung sein.

Obwohl manche Aspekte der vorliegenden Erfindung im Zusammenhang mit einer Vorrichtung beschrieben wurden, versteht es sich, dass diese Aspekte auch eine Beschreibung eines entsprechenden Verfahrens darstellen, sodass ein Block oder ein Bauelement einer Vorrichtung auch als ein entsprechender Verfahrensschritt oder als ein Merkmal eines Verfahrensschritts zu verstehen ist. Analog dazu stellen Aspekte, die im Zusammenhang mit einem oder als ein Verfahrensschritt beschrieben wurden, auch eine Beschreibung eines entsprechenden Blocks oder Details bzw. Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist die Erfindung lediglich durch den Schutzumfang der nachstehenden Patentansprüche und nicht durch die spezifischen Einzelheiten, die anhand der Beschreibung und der Erläuterung der Ausführungsbeispiele präsentiert wurden, beschränkt.

### Bezugszeichenliste

- 100: Lageranordnung
- 102: Welle
- 110: erstes Wälzlager
- 112: Innenring des ersten Wälzlagers
- 114: Lauffläche des Innenrings des ersten Wälzlagers
- 116: Wälzkörper des ersten Wälzlagers
- 120: zweites Wälzlager
- 122: Innenring des zweiten Wälzlagers
- 124: Lauffläche des Innenrings des zweiten Wälzlagers
- 126: Wälzkörper des zweiten Wälzlagers
- 130: Zwischenring
- 132: maximaler Außendurchmesser des Zwischenrings
- 200: Lageranordnung
- 250: axialer Anschlag
- 260: Distanzscheibe
- 270: Schraube
- 302: unbelasteter Zustand der Welle
- 304: mittige Belastung der Welle
- 310: Lageranordnung
- 312: Winkel an den Enden der Welle
- 320: Welle
- 330: rotierende Masse
- 400: Lageranordnung
- 402: Gehäuse
- 404: Welle
- 406: Befestigungsbord des Lagers
- 408: Außenringbefestigung
- 410: Innenring
- 412: Dichtung
- 414: Schraube
- 420: Außenring
- 430: Wälzkörper
- 440: Distanzscheibe
- 512: Führungsbord
- 514: Druck

## Patentansprüche

1. Lageranordnung (100, 200) mit folgenden Merkmalen:
ein erstes Wälzlager (110) mit einem Innenring (112), der mit einer Welle (102) verdrehfest verbindbar ist, wobei der Innenring (112) des ersten Wälzlagers (110) eine Lauffläche (114) für Wälzkörper (116) des ersten Wälzlagers (110) aufweist;
ein zweites Wälzlager (120) mit einem Innenring (122), der mit der Welle (102) verdrehfest verbindbar ist, wobei der Innenring (122) des zweiten Wälzlagers (120) eine Lauffläche (124) für Wälzkörper (126) des zweiten Wälzlagers (120) aufweist; und
einem Zwischenring (130), der in axialer Richtung zwischen dem Innenring (112) des ersten Wälzlagers (110) und dem Innenring (122) des zweiten Wälzlagers (120) angeordnet ist, wobei der Zwischenring (130) einen maximalen Außendurchmesser (132) aufweist, der kleiner ist als ein maximaler Durchmesser der Lauffläche (114) des Innenrings (112) des ersten Wälzlagers (110) und kleiner ist als ein maximaler Durchmesser der Lauffläche (124) des Innenrings (122) des zweiten Wälzlagers (120), wobei der Zwischenring (130) eine axiale Abmessung aufweist, die kleiner ist als eine radiale Abmessung eines Querschnitts des Zwischenrings (130), wobei der Zwischenring (130) eine axiale Abmessung aufweist, die kleiner als 0,5 mm ist,
**dadurch gekennzeichnet, dass** das erste Wälzlager (110) und das zweite Wälzlager (120) in einer X-Anordnung angeordnet sind.

2. Lageranordnung gemäß einem der vorhergehenden Ansprüche, wobei der Zwischenring (130) Stahl oder Kunststoff mit Glasfasern aufweist oder aus Stahl oder Kunststoff mit Glasfasern besteht.

3. Lageranordnung gemäß einem der vorhergehenden Ansprüche, wobei der Zwischenring (130) in axialer Richtung direkt an dem Innenring (112) des ersten Wälzlagers (110) und an dem Innenring (122) des zweiten Wälzlagers (120) anliegt.

4. Lageranordnung gemäß einem der vorhergehenden Ansprüche, wobei das erste Wälzlager (110) und das zweite Wälzlager (120) vom selben Lagertyp sind.

5. Lageranordnung gemäß einem der vorhergehenden Ansprüche, wobei das erste Wälzlager (110) und das zweite Wälzlager (120) Kegelrollenlager sind.

6. Lageranordnung gemäß einem der vorhergehenden Ansprüche, wobei das erste Wälzlager (110) und das zweite Wälzlager (120) in axialer Richtung symmetrisch zueinander konstruiert sind.

7. Windkraftanlage mit einer Lageranordnung nach einem der vorhergehenden Ansprüche.

## Claims

1. Bearing arrangement (100, 200) having the following features:
a first anti-friction bearing (110) with an inner ring (112) which can be connected fixedly to a shaft (102) so as to rotate with it, the inner ring (112) of the first anti-friction bearing (110) having a running face (114) for rolling bodies (116) of the first anti-friction bearing (110);
a second anti-friction bearing (120) with an inner ring (122) which can be connected fixedly to the shaft (102) so as to rotate with it, the inner ring (122) of the second anti-friction bearing (120) having a running face (124) for rolling bodies (126) of the second anti-friction bearing (120); and
an intermediate ring (130) which is arranged in the axial direction between the inner ring (112) of the first anti-friction bearing (110) and the inner ring (122) of the second anti-friction bearing (120), the intermediate ring (130) having a maximum external diameter (132) which is smaller than a maximum diameter of the running face (114) of the inner ring (112) of the first anti-friction bearing (110) and smaller than a maximum diameter of the running face (124) of the inner ring (122) of the second anti-friction bearing (120), the intermediate ring (130) having an axial dimension which is smaller than a radial dimension of a cross section of the intermediate ring (130), the intermediate ring (130) having an axial dimension which is smaller than 0.5 mm,
**characterized in that** the first anti-friction bearing (110) and the second anti-friction bearing (120) are arranged in an X-arrangement.

2. Bearing arrangement according to one of the preceding claims, the intermediate ring (130) having steel or plastic with glass fibres or consisting of steel or plastic with glass fibres.

3. Bearing arrangement according to either of the preceding claims, the intermediate ring (130) bearing in the axial direction directly against the inner ring (112) of the first anti-friction bearing (110) and against the inner ring (122) of the second anti-friction bearing (120).

4. Bearing arrangement according to one of the preceding claims, the first anti-friction bearing (110) and the second anti-friction bearing (120) being of the same bearing type.

5. Bearing arrangement according to one of the preceding claims, the first anti-friction bearing (110) and the second anti-friction bearing (120) being tapered roller bearings.

6. Bearing arrangement according to one of the preceding claims, the first anti-friction bearing (110) and the second anti-friction bearing (120) being of symmetrical construction with respect to one another in the axial direction.

7. Wind power plant having a bearing arrangement according to one of the preceding claims.

## Revendications

1. Agencement de palier (100, 200) comprenant les caractéristiques suivantes :
un premier palier à roulement (110) comprenant une bague interne (112) qui peut être connectée de manière solidaire en rotation à un arbre (102), la bague interne (112) du premier palier à roulement (110) présentant une surface de roulement (114) pour des corps de roulement (116) du premier palier à roulement (110) ;
un deuxième palier à roulement (120) comprenant une bague interne (122) qui peut être connectée de manière solidaire en rotation à l'arbre (102), la bague interne (122) du deuxième palier à roulement (120) présentant une surface de roulement (124) pour des corps de roulement (126) du deuxième palier à roulement (120) ; et
une bague intermédiaire (130) qui est disposée dans la direction axiale entre la bague interne (112) du premier palier à roulement (110) et la bague interne (122) du deuxième palier à roulement (120), la bague intermédiaire (130) présentant un diamètre extérieur maximal (132) qui est inférieur à un diamètre maximal de la surface de roulement (114) de la bague interne (112) du premier palier à roulement (110) et qui est inférieur à un diamètre maximal de la surface de roulement (124) de la bague interne (122) du deuxième palier à roulement (120), la bague intermédiaire (130) présentant une dimension axiale qui est inférieure à une dimension radiale d'une section transversale de la bague intermédiaire (130), la bague intermédiaire (130) présentant une dimension axiale qui est inférieure à 0,5 mm,
**caractérisé en ce que** le premier palier à roulement (110) et le deuxième palier à roulement (120) sont disposés suivant un agencement en X.

2. Agencement de palier selon l'une quelconque des revendications précédentes, dans laquelle la bague intermédiaire (130) présente de l'acier ou du plastique avec des fibres de verre ou se compose d'acier ou de plastique avec des fibres de verre.

3. Agencement de palier selon l'une quelconque des revendications précédentes, dans laquelle la bague intermédiaire (130), dans la direction axiale, s'applique directement contre la bague interne (112) du premier palier à roulement (110) et contre la bague interne (122) du deuxième palier à roulement (120).

4. Agencement de palier selon l'une quelconque des revendications précédentes, dans lequel le premier palier à roulement (110) et le deuxième palier à roulement (120) sont du même type de palier.

5. Agencement de palier selon l'une quelconque des revendications précédentes, dans lequel le premier palier à roulement (110) et le deuxième palier à roulement (120) sont des paliers à rouleaux coniques.

6. Agencement de palier selon l'une quelconque des revendications précédentes, dans lequel le premier palier à roulement (110) et le deuxième palier à roulement (120) sont construits de manière symétrique l'un par rapport à l'autre dans la direction axiale.

7. Éolienne comprenant un agencement de palier selon l'une quelconque des revendications précédentes.
